# EUROPÄISCHE PATENTSCHRIFT

(11) **EP 0 838 360 B1**
(45) Veröffentlichungstag und Bekanntmachung des Hinweises auf die Patenterteilung: **28.04.1999**
(21) Anmeldenummer: 97117464.4
(22) Anmeldetag: 09.10.1997
(51) Int. Cl.: B60K 15/03, F02M 37/10

(54) **Haltevorrichtung für ein in einer Öffnung eines Kraftfahrzeugtanks einsetzbares Bauteil**
Device for fixing a part in an opening of a motor vehicle tank
Fixation pour une pièce disposée dans une ouverture d'un réservoir d'un véhicule à moteur

(30) Priorität: 23.10.1996 DE 19643732
(43) Veröffentlichungstag der Anmeldung: 29.04.1998
(73) Patentinhaber: Mannesmann VDO Aktiengesellschaft, 60388 Frankfurt am Main (DE)
(72) Erfinder: Plank, Wolfgang, 65428 Rüsselsheim (DE); Günther, Klaus-Peter, 65326 Aarbergen (DE)
(74) Vertreter: Klein, Thomas, Dipl.-Ing.

(56) Entgegenhaltungen:
- DE-A- 4 128 128
- DE-A- 4 240 629
- US-A- 4 333 580
- US-A- 4 501 376
- US-A- 4 998 639

## Beschreibung

Die Erfindung bezieht sich auf eine Haltevorrichtung für ein in einer Öffnung eines Kraftfahrzeugtanks eingesetztes Bauteil mit einem am Kraftfahrzeugtank festgelegten Haltering und einem mit dem Haltering zusammenwirkenden Schließring, der mit radialen Rastsegmenten nach Art eines Bajonettverschlusses mit radial nach innen vorstehenden, starren Haltelaschen des Halteringes zusammenwirkt und dabei einen die Öffnung des Tanks übergreifenden Flansch des Bauteiles gegen die Tankoberfläche drückt, sowie mit einem elastischen Dichtring in dem vertikalen Ringspalt zwischen dem Bauteil und der Öffnungsbegrenzungswand.

Bei einer bekannten Haltevorrichtung dieser Art (DE-A-41 28 128) sind die Rastsegmente des Schließringes als federnde Zungen ausgebildet, wodurch vorhandene Maßtoleranzen nur im begrenzten Umfange ausgleichbar sind. Außerdem ist die Anpreßkraft, die durch diese elastischen federnden Zungen ausgeübt wird nicht besonders groß, so daß eine sichere Anpressung des Bauteilflansches an der Oberfläche des Kraftfahrzeugtanks nicht immer gewährleistet ist. Der im Vertikalen Ringspalt zwischen dem einzusetzenden Bauteil und der Öffnungsbegrenzungswand eingesetzte Dichtring ist als O-Ring ausgebildet und damit in seiner Dichtwirkung von vorhandenen Maßtoleranzen abhängig.

Aufgabe der Erfindung ist es, eine Haltevorrichtung der weiter oben angegebenen Art zu schaffen, die eine große Halte- bzw. Schließkraft erzeugt, große Fertigungstoleranzen ausgleichen kann und eine sichere Abdichtung gewährleistet.

Diese Aufgabe wird ausgehend von einer Haltevorrichtung der eingangs erläuterten Art erfindungsgemäß dadurch gelöst, daß die Rastsegmente starr ausgeführt und nach Art von Gewindeabschnitten schräg angestellt sind, daß die mit den Haltelaschen zusammenwirkenden Oberflächen der Rastsegmente mit radial verlaufenden Einkerbungen versehen sind, daß die Haltelaschen an ihren jeweils mit den in Höhenrichtung niedrigeren Bereichen der Rastsegmente zusammenwirkenden Enden mit Rastkeilen versehen sind, die in die Einkerbungen einrastbar sind und daß zwischen Tankoberfläche und Flansch des zu haltenden Bauteils ein weiterer elastischer Dichtring eingesetzt ist.

Durch die starre Ausbildung der nach Art von Gewindeabschnitten schräg angestellten Rastsegmenten können große Anpreßkräfte ausgeübt und auch große Toleranzbereiche ausgeglichen werden. Durch die großen Anpreßkräfte ist eine sichere Abdichtung durch den zwischen der Tankoberfläche und dem Flansch des Bauteiles eingesetzten Dichtring gewährleistet. Durch das Zusammenwirken der an den Haltelaschen angeordneten Rastkeilen mit den Einkerbungen der Rastsegmente ist eine Sicherung gegen selbsttatiges Lösen der Haltevorrichtung geschaffen. Die Anordnung eines weiteren elastischen Dichtringes zwischen Tankoberfläche und Flansch des zu haltenden Bauteiles gewährleistet eine absolut sichere Abdichtung des Kraftfahrzeugtanks, da dieser Dichtring durch die schräg angestellten Rastsegmente, die aufgrund ihrer Schrägstellung einen großen Anpreßweg und eine große Anpreßkraft zur Folge haben, mit großer Kraft gegen die Tankoberfläche gedrückt wird.

In vorteilhafter Weise sind die beiden Dichtringe zu einem einzigen, einstückigen Dichtring mit im Querschnitt L-förmiger Gestalt zusammengefaßt, wobei der lange Schenkel mit abstehenden Dichtlippen versehen zur Abdichtung des Vertikalspaltes und der kurze Schenkel zur Abdichtung zwischen dem Flansch des Bauteiles und der Tankoberfläche dient.

Wenn in weiterer Ausgestaltung der Erfindung die Winkelabstände der Einkerbungen auf jedem Rastsegment gleich groß sind, jedoch die Winkelabstände zwischen den jeweils ersten Einkerbungen benachbarter Rastsegmente unterschiedlich sind und die Winkelabstände zwischen den Rastkeilen der Haltelaschen untereinander gleich sind, so ist gewährleistet, daß bei einem bestimmten Spannzustand, der durch ein vorgegebenes Drehmoment am Schließring erzielt ist, zumindest ein Rastkeil in eine Einkerbung eindringt und den Schließring in seiner festgespannten Lage sichert und daß obendrein die Winkelabstände bis zum Einrasten eines anderen Rastkeiles in eine Einkerbung geringer sind, als dies den Winkelabständen zwischen den einzelnen Einkerbungen untereinander entspricht. Hierdurch ergeben sich sehr feine Teilungsabstände, die nahezu an jeder Drehstellung des Schließringes eine Einrastmöglichkeit für einen Rastkeil schaffen. Außerdem ist es nicht notwendig, den Schließring weit über das vorgesehene Drehmoment, das zum Schließen des Ringes notwendig ist, hinauszudrehen, um die nächste Rastkerbe zu erreichen.

Eine einfache Möglichkeit zur Schaffung der Rastkeile besteht nach der Erfindung darin, daß die Rastkeile durch Abwinkelung der Enden der Haltelaschen gebildet sind.

Wenn in weiterer Ausgestaltung der Erfindung die Haltelaschen an den den Rastkeilen abgewandten Enden mit Abwinkelungen versehen sind, die zu den Rastkeilen entgegengesetzt ausgerichtet sind, so wird in ebenfalls einfacher Weise das Einführen des Schließringes mit seinen Rastsegmenten unter die Haltelaschen vereinfacht.

Wenn in weiterer Ausgestaltung der Erfindung die Haltelaschen zwischen den beiden endseitigen Abwinkelungen horizontal verlaufend ausgebildet sind und wenn obendrein noch die Steigung der Rastsegmente am Schließring geringfügig kleiner ist, als dies der Steigung der Verbindungslinie zwischen der Spitze des Rastkeiles und der Unterkante der Haltelasche an dem dem Rastkeil gegenüberliegenden Ende der Haltelasche entspricht, so wird erreicht, daß die sich aus der Gewindesteigung der Rastsegmente und dem Verdrehen des Schließringes gegenüber den Haltelaschen ergebende Anpreßkraft nicht nur auf den Rastkeil, sondern auch auf die Unterkante der Haltelasche im Bereich der nach oben gerichteten Abwinklung verteilt, wodurch erreicht wird, daß die gesamte Haltekraft nicht an einer einzigen Schneide eines Rastkeiles der vielen auf den Umfang verteilten Haltelaschen angreift, sondern daß auch von den Unterkanten anderer Haltelaschen Schließkräfte auf die Rastsegmente und damit auf den Schließring übertragen werden, deren Rastkeile nicht eingerastet sind, so daß die Haltekräfte möglichst gleichmäßig über den Umfang des Schließringes verteilt sind.

Wenn in weiterer vorteilhafter Ausgestaltung der Erfindung der Haltering, insbesondere bei Verwendung in Verbindung mit einem nach dem Blasverfahren hergestellten Kraftstofftank, in dessen Wandung er während des Blasvorganges mit eingeformt ist, erfindungsgemäß einem im Querschnitt Z-förmigen Grundkörper aufweist, der untere Ringflansch in Richtung auf die Tanköffnung und der obere Ringflansch in einzelne Zungen und Laschen unterteilt ist, die in die entgegengesetzte Richtung weisen, von denen die Laschen die Haltelaschen tragen, die nach zweimaligem Abwinkeln eines Teils einer Lasche parallel zum unteren Ringflansch verlaufen, so wird sichergestellt, daß die gesamte durch den Schließring ausgeübte Haltekraft zwischen den Haltelaschen und dem nach innen gerichteten unteren Ringflansch des Halteringes aufgenommen und nicht auf die Befestigungsstellen zwischen dem Haltering und dem Tank übertragen wird. Ablöseerscheinungen zwischen Haltering und Tankoberfläche, die auf ein übermäßiges Anziehen des Schließringes zurückgehen können, werden hierdurch sicher vermieden.

Neben der Tatsache, daß bei einem Kunststofftank der nach innen stehende untere Ringflansch in der Kunststoffwand eingebettet ist und somit einen großen Anteil zu sicheren Halterung des Halteringes in der Kunststoffwand beiträgt, dienen die weiteren nachfolgenden vorteilhaften Maßnahmen gemäß der Erfindung dazu, die Verbindung zwischen Haltering und Kunststoffwand des Tanks zu verbessern. Die erste Maßnahme besteht darin, daß die Zungen, die frei von Haltelaschen sind in die Kunststoffwand des Tanks eingebettet sind. Die zweite Maßnahme besteht darin, daß der die beiden Schenkel bzw. Ringflansche verbindende vertikale Steg des Halteringes Durchbrechungen aufweist. In diese Durchbrechungen dringt beim Einformen des Halteringes in die Kunststoffwand der Kunststoff ein, wodurch eine innige Verbindung zwischen Haltering und Kunststoffwand erzielbar ist.

Die weitere vorteilhafte Maßnahme, wonach die die Haltelaschen tragenden Laschen einen radial vom vertikalen Steg abstehenden Abschnitt und einen lotrechten Abschnitt aufweisen, dessen mittlerer Bereich abgewinkelt, radial nach innen stehend die Haltelaschen bildet, führt zu einer Versteifung des Halteringes im Bereich der Haltelaschen, wodurch diese größeren Schließkräften ausgesetzt werden können.

Damit der Schließring eine ausreichende Festigkeit aufweist, um die notwendigen Halte- und Schließkräfte aufbringen zu können und andererseits leicht betätigbar ist, ist in weiterer Ausgestaltung der Erfindung vorgesehen, daß der Schließring im Querschnitt L-förmig ausgebildet ist, daß die Rastsegmente durch Verformen des horizontalen Schenkels gebildet sind und daß der vertikale Schenkel Ausnehmungen für ein Werkzeug aufweist.

Um ein Überdrehen des Schließringes bei übermäßigem Drehmoment zu vermeiden, kann in weiterer Ausgestaltung der Erfindung am höhergelegenen Ende zumindest eines Rastsegmentes des Schließringes ein Endanschlag vorgesehen sein. Dieser Endanschlag, der durch eine Abwinklung des Rastelementes gebildet sein kann, wirkt bei entsprechend starker Verdrehung des Schließringes mit einer zugeordneten Haltelasche zusammen und verhindert somit ein Weiterdrehen des Schließringes.

Die Erfindung wird nachfolgend anhand eines in der Zeichnung dargestellten Ausführungsbeispieles näher erläutert. In der Zeichnung zeigen:

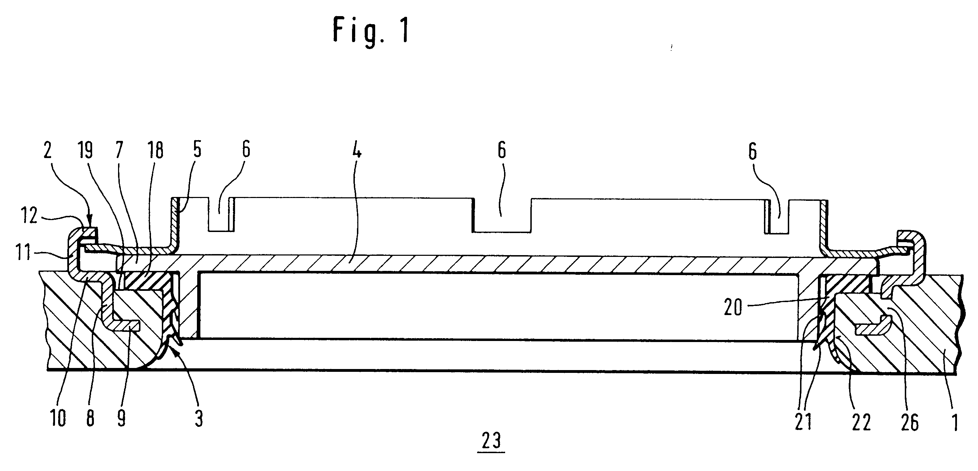

- **Figur 1:**: einen Querschnitt durch eine Haltevorrichtung;
- **Figur 2:**: eine Draufsicht auf einen Schließring der Haltevorrichtung;
- **Figur 3:**: eine Ansicht des durch einen Kreis in Figur 2 markierten Abschnittes in Richtung des Pfeils X in vergrößertem Maßstab; und
- **Figur 4:**: einen Teilausschnitt aus der Haltevorrichtung im Bereich einer Haltelasche;

In der mit 1 bezeichneten Wand eines nach dem Blasverfahren aus Kunststoff hergestellten Kraftfahrzeugtanks ist ein Haltering 2 mit eingeformt. Mit 3 ist ein Dichtring bezeichnet, der im Querschnitt L-förmig ausgebildet ist und einerseits zur Abdichtung eines vertikalen Spaltes zwischen dem Rand einer in der Wandung 1 des Kraftfahrzeugtankes ausgebildeten Öffnung und einem einzusetzenden Bauteil 4 dient, während der waagrechte Schenkel des Dichtringes 3 zwischen der Oberfläche des Tanks und einem abstehenden Flansch 7 des Bauteiles 4 dient. Im dargestellten Ausführungsbeispiel handelt es sich bei dem Bauteil 4 um einen Verschlußflansch für den Vorratsgeber einer Förderpumpe für Kraftstoff, wobei die durch diesen VerschlußfIansch abzudichtende Öffnung im Tank zum Einsetzen der Förderpumpe dient. Dieser Verschlußflansch 4 wird mittels eines Schließringes 5 in seine abdichtende Lage gepreßt, der mit Ausnehmungen 6 für den Einsatz eines Werkzeuges versehen ist.

Der Haltering 2 weist einen vertikalen Steg 8, einen rechtwinklig dazu abgeknickten, nach innen gerichteten Ringflansch 9 und mehrere radial nach außen gerichtete Zungen und Laschen 10 auf, von denen jede Zunge in ihrer horizontalen Lage in der Wandung 1 des Tanks eingebetet ist, wobei die nach außen gerichteten Zungen und Laschen 10, der vertikale Steg 8 und der nach innen gerichtete Ringflansch 9 einen Z-förmigen Grundkörper des Halteringes bilden. Die zwischen den waagrecht abstehenden Zungen liegenden Laschen weisen einen vertikal nach oben abgeknickten Steg 11 auf, an dem an der Oberseite durch nochmaliges Abknicken eine Haltelasche 12 ausgebildet ist. Im Steg 8 sind Durchbrechungen 26 vorgesehen, in die der Kunststoff der Tankwandung beim Einbetten des Halteringes 2 eindringt.

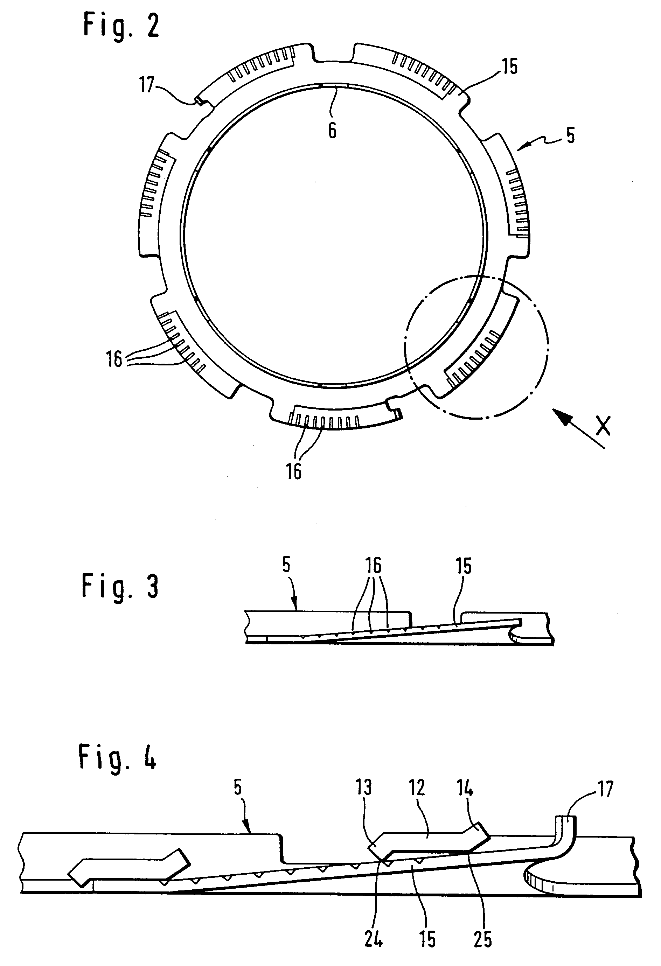

Die in horizontaler Richtung nach innen abstehenden Haltelaschen 12 weisen an ihren Enden, wie aus Figur 4 ersichtlich, einerseits einen nach unten gerichteten Rastkeil 13 und andererseits eine nach oben gerichtete Abwinklung 14 auf, die als Einführhilfe für Rastsegmente 15 dient, die am Schließring 5 ausgebildet sind. Die einzelnen Rastsegmente 15 sind aus den Darstellungen in den Figuren 2 bis 4 besonders deutlich zu ersehen und tragen an ihren oberen Flächen Einkerbungen 16, in die zumindest ein Rastkeil 13 der Haltelaschen 12 eingreift. Der Schließring 5 ist einstückig ausgebildet und weist im wesentlichen L-förmigen Querschnitt auf, wobei die einzelnen Rastsegmente 15 durch Verformen des waagrecht abstehenden Schenkels gebildet und nach Art von Gewindeabschnitten mit einer bestimmten Steigung schräg gestellt sind, um durch Verdrehen des Schließringes 5 gegenüber dem Haltering 2 eine senkrecht auf die Tankoberfläche wirkende Haltekraft zu erzeugen, wenn die schräg gestellten Rastsegmente 15 unter die Haltelaschen 12 greifen. Die Haltelaschen 12 verlaufen parallel zu dem nach innen vorstehenden Ringflansch 9, so daß die durch den Schließring 5 erzeugten Haltekräfte zwischen den Haltelaschen 12 und dem Ringflansch 9 aufgenommen werden, ohne daß hierbei Kräfte auf die Verbindungsstellen zwischen dem Haltering 2 und der Wandung 1 des Kraftfahrzeugtanks ausgeübt werden.

Die Einkerbungen 16 in den einzelnen Rastsegmenten 15 weisen untereinander gleichen Winkelabstand auf, jedoch ist jede Reihe von Einkerbungen 16 eines Rastsegmentes gegenüber dem benachbarten Rastsegment winkelförmig verdreht, so daß bei gleichmäßiger Verteilung der Haltelaschen 12 und ihrer Rastkeile 13 nicht alle Rastkeile 13 in eine Einkerbung 16 bei einem bestimmten Verdrehzustand des Sicherungsringes 5 einrasten. Durch diese Ausgestaltung rastet mindestens ein Rastkeil 13 in eine Einkerbung ein, jedoch können bei gleichförmig über den Umfang verteilten Rastkeilen 13 diese nicht alle in entsprechende Einkerbungen 16 eingreifen. Der Vorteil dieser winkelmäßigen Überdrehung der einzelnen Reihen der Einkerbungen gegenüber benachbarten Rastsegmenten ist, daß die Winkelabstände zwischen den einzelnen Einrastmöglichkeiten geringer sind als dies den Winkelabständen der Einkerbungen 16 eines Rastsegmentes entspricht. An dem vertikalen Schenkel des Schließringes 5 sind die Ausnehmungen 6 vorgesehen, in die ein Werkzeug zur Erzeugung eines bestimmten Drehmomentes einsetzbar ist. Am Ende zweier Rastsegemente, die sich im wesentlichen diametral gegenüberliegen, sind Endanschläge 17 ausgebildet, die ein Durchrutschen der Rastsegmente unter den Haltelaschen verhindern.

Der Dichtring 3 ist im wesentlichen L-förmig ausgeführt und liegt mit seinem kürzeren waagrechten Schenkel 18 zwischen dem Flansch 7 des Verschlußflansches 4 und der Oberfläche 19 der Wand des Kraftstoffbehälters. Sein vertikaler Schenkel 20 weist zwei Dichtlippen 21 auf und dichtet den vertikalen Spalt zwischen dem anzubauenden Bauteil 4 und dem Rand 22 der Öffnung 23 ab.

Weiterhin können die Auflageflächen des Schenkels 18 bzw. dessen Anlageflächen an der Wand 1 und/oder dem Bauteil 4 mit labyrinthartigen Rillen versehen sein.

Die Steigung der einzelnen Rastsegmente 15 ist etwas geringer als es der Verbindungslinie zwischen der Schneide 24 des Rastkeils 13 und der Unterkante 25 der Haltelasche 12 an dem dem Rastkeil 13 gegenüberliegenden Ende der Haltelasche 12 entspricht. Hierdurch ist sichergestellt, daß diese Unterkante 25 beim Festschrauben des Sicherungsringes 5 zusätzlich zum Rastkeil 13 auf der Oberfläche des Rastsegmentes 15 aufliegt, wodurch gewährleistet ist, daß die Haltekraft auf mehrere Anlagepunkte und nicht nur auf die Rastkeile verteilt ist.

## Patentansprüche

1. Haltevorrichtung für ein in einer Öffnung eines Kraftfahrzeugtanks eingesetztes Bauteil (4) mit einem am Kraftfahrzeugtank festgelegten Haltering (2) und einem mit dem Haltering zusammenwirkenden Schließring (5), der mit radialen Rastsegmenten (15) nach Art eines Bajonettverschlusses mit radial nach innen vorstehenden, starren Haltelaschen (12) des Halteringes (2) zusammenwirkt und dabei einen die Öffnung des Tanks übergreifenden Flansch (7) des Bauteiles (4) gegen die Tankoberfläche drückt sowie mit einem elastischen Dichtungsring (20) in dem vertikalen Ringspalt zwischen dem Bauteil (4) und der Öffnungsbegrenzungwand, **dadurch gekennzeichnet,** daß die Rastsegmente (15) starr ausgeführt und nach Art von Gewindeabschnitten schräg angestellt sind, daß die mit den Haltelaschen (12) zusammenwirkenden Oberflächen der Rastsegmente (15) mit radial verlaufenden Einkerbungen (16) versehen sind, daß die Haltelaschen (12) an ihren jeweils mit den in Höhenrichtung niedrigeren Bereichen der Rastsegmente (15) zusammenwirkenden Enden mit Rastkeilen (13) versehen sind, die in die Einkerbungen (16) einrastbar sind und daß zwischen Tankoberfläche (19) und Flansch (7) des zu haltenden Bauteiles (4) ein weiterer elastischer Dichtring (18) eingesetzt ist.

2. Haltevorrichtung nach Anspruch 1, **dadurch gekennzeichnet,** daß beide Dichtringe (18, 20) zu einem einzigen einstückigen Dichtring (3) mit im Querschnitt L-förmiger Gestalt zusammengefaßt sind, wobei der lange Schenkel (20) mit abstehenden Dichtlippen (21) versehen, zur Abdichtung des Vertikalspaltes und der kurze Schenkel (18) zur Abdichtung zwischen dem Flansch (7) des Bauteiles (4) und der Tankoberfläche (19) dient.

3. Haltevorrichtung nach Anspruch 1 oder 2, **dadurch gekennzeichnet,** daß die Winkelabstände der Einkerbungen (16) auf jedem Rastsegment (15) gleich groß sind, daß jedoch die Winkelabstände zwischen den jeweils ersten Einkerbungen benachbarter Rastsegmente unterschiedlich sind und daß die Winkelabstände zwischen den Rastkeilen (13) der Haltelaschen (12) untereinander gleich sind.

4. Haltevorrichtung nach einem der Ansprüche 1 bis 3, **dadurch gekennzeichnet,** daß die Rastkeile 13 durch Abwinkelung der Enden der Haltelasche (12) gebildet sind.

5. Haltevorrichtung nach einem der Ansprüche 1 bis 4, **dadurch gekennzeichnet,** daß die Haltelaschen (12) an den den Rastkeilen (13) abgewandten Enden mit Abwinkelungen (14) versehen sind, die zu den Rastkeilen (13) entgegensetzt ausgerichtet sind.

6. Haltevorrichtung nach einem der Ansprüche 1 bis 5, **dadurch gekennzeichnet,** daß die Haltelaschen (12) zwischen den beiden endseitigen Abwinkelungen (13, 14) horizontal verlaufend ausgebildet sind.

7. Haltevorrichtung nach einem der Ansprüche 1 bis 6, **dadurch gekennzeichnet,** daß die Steigung der Rastsegmente (15) am Schließring (5) geringfügig kleiner ist als dies der Steigung der Verbindunglinie zwischen der Spitze (24) des Rastkeiles (13) und der Unterkante (25) der Haltelasche (12) an dem dem Rastkeil (13) gegenüberliegenden Ende der Haltelasche (12) entspricht.

8. Haltevorrichtung nach einem der Ansprüche 1 bis 7, dadurch gekennzeichnet, daß der Haltering, insbesondere bei Verwendung in Verbindung mit einem nach dem Blasverfahren hergestellten Kunststofftank, in dessen Wand er während des Blasvorganges mit eingeformt ist, einen im Querschnitt Z-förmigen Grundkörper aufweist, daß der untere Ringflansch (9) in Richtung auf die Tanköffnung und der obere Ringflansch in einzelne Zungen und Laschen (10) unterteilt ist, die in die entgegengesetzte Richtung weisen, von denen die Laschen (10) die Haltelasche (12) tragen, die nach zweimaligem Abwinkeln eines Teils einer Lasche (10) parallel zum unteren Ringflansch (9) verlaufen.

9. Haltevorrichtung nach Anspruch 8, **dadurch gekennzeichnet,** daß die Zungen, die frei von Haltelaschen sind, in der Kunststoffwand (1) des Tanks eingebettet sind.

10. Haltevorrichtung nach Anspruch 8 oder 9, **dadurch gekennzeichnet,** daß der die beiden Schenkel (9, 10) verbindende vertikale Steg (8) des Halteringes (2) Durchbrechungen (26) aufweist.

11. Haltevorrichtung nach einem der Ansprüche 8 bis 10, **dadurch gekennzeichnet,** daß die die Haltelaschen (12) tragenden Laschen (10) einen radial vom vertikalen Steg (8) abstehenden Abschnitt und einen lotrechten Abschnitt aufweisen, dessen mittlerer Bereich abgewinkelt, radial nach innen stehend die Haltelaschen (12) bildet.

12. Haltevorrichtung nach einem der Ansprüche 1 bis 11, **dadurch gekennzeichnet,** daß der Schließring (5) im Querschnitt L-förmig ausgebildet ist, daß die Rastsegmente (15) durch Verformen des horizontalen Schenkels gebildet sind und daß der vertikale Schenkel Ausnehmungen (6) für ein Werkzeug aufweist.

13. Haltevorrichtung nach einem der Ansprüche 1 bis 12, **dadurch gekennzeichnet,** daß am höher gelegenen Ende zumindest eines Rastsegmentes (15) des Schließringes (5) ein Endanschlag (17) vorgesehen ist.

## Claims

1. Retaining device for a component (4) inserted in an opening in a motor vehicle tank, having a retaining ring (2) fastened to the motor vehicle tank, and a closing ring (5) which interacts with the retaining ring and which, by means of radial latching segments (15), interacts with radially inwardly protruding, rigid retaining clips (12) of the retaining ring (2) in the manner of a bayonet-type fastening and, as it does so, presses a flange (7) of the component (4), which flange engages over the opening of the tank, against the tank surface, and also having an elastic sealing ring (20) in the vertical annular gap between the component (4) and the boundary wall of the opening, characterized in that the latching segments (15) are of rigid design and are set obliquely in the manner of threaded sections, in that those surfaces of the latching segments (15) which interact with the retaining clips (12) are provided with notches (16) running radially, in that the retaining clips (12), at their ends which interact in each case with those regions of the latching segments (15) which are lower in the vertical direction, are provided with latching wedges (13) which can be latched into the notches (16), and in that a further, elastic sealing ring (18) is inserted between the tank surface (19) and flange (7) of the component (4) to be held in place.

2. Retaining device according to Claim 1, characterized in that the two sealing rings (18, 20) are combined to form a single, integral sealing ring (3) having an L-shaped design in cross section, the long limb (20) being provided with protruding sealing lips (21) to seal the vertical gap, and the short limb (18) being used for sealing between the flange (7) of the component (4) and the tank surface (19).

3. Retaining device according to Claim 1 or 2, characterized in that the angular spacings of the notches (16) on each latching segment (15) are of the same size, in that the angular spacings between the respective first notches of adjacent latching segments are, however, different, and in that the angular spacings between the latching wedges (13) of the retaining clips (12) are the same as one another.

4. Retaining device according to one of Claims 1 to 3, characterized in that the latching wedges (13) are formed by bending the ends of the retaining clip (12).

5. Retaining device according to one of Claims 1 to 4, characterized in that the retaining clips (12), at those ends which face away from the latching wedges (13), are provided with bent portions (14) of opposite orientation to the latching wedges (13).

6. Retaining device according to one of Claims 1 to 5, characterized in that the retaining clips (12) are designed such that they run horizontally between the two end bent portions (13, 14).

7. Retaining device according to one of Claims 1 to 6, characterized in that the pitch of the latching segments (15) on the closing ring (5) is slightly smaller than corresponds to the pitch of the connecting line between the tip (24) of the latching wedge (13) and the lower edge (25) of the retaining clip (12) at that end of the retaining clip (12) which is opposite the latching wedge (13).

8. Retaining device according to one of Claims 1 to 7, characterized in that the retaining ring, in particular when used in conjunction with a plastic tank which is produced by blow-moulding and in whose wall said retaining ring is formed during the blow-moulding process, has a base body which is Z-shaped in cross section, in that the lower annular flange (9) is divided in the direction of the tank opening, and the upper annular flange is divided into individual tabs and clips (10) which point in the opposite direction and of which the clips (10) bear the retaining clips (12) which, after part of a clip (10) has been bent twice, run parallel to the lower annular flange (9).

9. Retaining device according to Claim 8, characterized in that the tabs, which stand out from retaining clips, are embedded in the plastic wall (1) of the tank.

10. Retaining device according to Claim 8 or 9, characterized in that the vertical web (8) of the retaining ring (2), which web connects the two limbs (9, 10), has broken-through portions (26).

11. Retaining device according to one of Claims 8 to 10, characterized in that those clips (10) which bear the retaining clips (12) have a section which protrudes radially from the vertical web (8) and a perpendicular section whose central region is bent and protrudes radially inwards forming the retaining clips (12).

12. Retaining device according to one of Claims 1 to 11, characterized in that the closing ring (5) is of L-shaped design in cross section, in that the latching segments (15) are formed by deformation of the horizontal limb, and in that the vertical limb has recesses (6) for a tool.

13. Retaining device according to one of Claims 1 to 12, characterized in that an end stop (17) is provided at the higher end of at least one latching segment (15) of the closing ring (5).

## Revendications

1. Dispositif de retenue pour une pièce (4) logée dans une ouverture d'un réservoir de véhicule à moteur, comprenant un anneau de retenue (2) disposé sur un réservoir de véhicule à moteur et un anneau de fermeture (5) coopérant avec l'anneau de retenue, et qui coopère, par le biais de segments crantés radiaux (15), à la manière d'une fermeture à baïonnette, avec des pattes de retenue (12) rigides de l'anneau de retenue (2), en saillie radialement vers l'intérieur, une bride (7) de la pièce (4) dépassant de l'ouverture du réservoir pressant dans ce cas contre la surface du réservoir, et comprenant également un joint torique élastique (20) dans l'espace annulaire vertical entre la pièce (4) et la paroi définissant l'ouverture, **caractérisé en ce que** les segments crantés (15) sont rigides et disposés en biais comme des portions de filets, en ce que les surfaces des segments crantés (15) coopérant avec les pattes de retenue (12) sont pourvues d'encoches (16) s'étendant radialement, en ce que les pattes de retenue (12), à leur extrémité coopérant chacune avec les régions inférieures des segments crantés (15), dans le sens vertical, sont pourvues d'ergots de crantage (13), qui peuvent s'engager dans les encoches (16), et en ce qu'entre la surface du réservoir (19) et la bride (7) de la pièce (4) à retenir est inséré un autre joint torique élastique (18).

2. Dispositif de retenue selon la revendication 1, **caractérisé en ce que** les deux joints toriques (18, 20) sont réunis pour former un seul joint torique (3) d'une pièce ayant une forme en L en section transversale, la longue portion (20) pourvue de lèvres d'étanchéité saillantes (21) servant à assurer l'étanchéité de l'espace vertical et la portion courte (18) servant à l'étanchéité entre la bride (7) de la pièce (4) et la surface du réservoir (19).

3. Dispositif de retenue selon la revendication 1 ou 2, **caractérisé en ce que** les distances angulaires entre les encoches (16) sur chaque segment cranté (15) sont égales, en ce que toutefois les distances angulaires entre les première encoches respectives de segments crantés voisins sont différentes et en ce que les distances angulaires entre les ergots de crantage (13) des pattes de retenue (12) sont égales.

4. Dispositif de retenue selon l'une quelconque des revendications 1 à 3, **caractérisé en ce que** les ergots de crantage (13) sont formés par courbure des extrémités des pattes de retenue (12).

5. Dispositif de retenue selon l'une quelconque des revendications 1 à 4, **caractérisé en ce que** les pattes de retenue (12) sont pourvues, aux extrémités opposées aux ergots de crantage (13), de courbures (14) qui sont orientées dans le sens opposé aux ergots de crantage (13).

6. Dispositif de retenue selon l'une quelconque des revendications 1 à 5, **caractérisé en ce que** les pattes de retenue (12) s'étendent horizontalement entre les deux courbures (13, 14) au niveau des extrémités.

7. Dispositif de retenue selon l'une quelconque des revendications 1 à 6, **caractérisé en ce que** l'inclinaison des segments crantés (15) sur l'anneau de fermeture (5) est légèrement plus petite que l'inclinaison de la ligne de connexion entre la pointe (24) de l'ergot de crantage (13) et l'arête inférieure (25) de la patte de retenue (12) à l'extrémité de la patte de retenue (12) opposée à l'ergot de crantage (13).

8. Dispositif de retenue selon l'une quelconque des revendications 1 à 7, caractérisé en ce que l'anneau de retenue, en particulier lors de l'utilisation dans une connexion avec un réservoir en plastique fabriqué par le procédé de soufflage, dans la paroi duquel il est formé conjointement au cours du processus de soufflage, présente un corps de base en forme de Z en section transversale, en ce que la bride d'anneau inférieure (9) est divisée, dans la direction de l'ouverture du réservoir et de la bride d'anneau supérieure, en languettes et pattes individuelles (10) qui sont dirigées dans la direction opposée, depuis les pattes (10) portant les pattes de retenue (12), qui s'étendent, après une double courbure d'une partie d'une patte (10), parallèlement à la bride d'anneau inférieure (9).

9. Dispositif de retenue selon la revendication 8, **caractérisé en ce que** les langues qui sont exemptes de pattes de retenue sont encastrées dans la paroi en plastique (1) du réservoir.

10. Dispositif de retenue selon la revendication 8 ou 9, **caractérisé en ce que** la branche verticale (8) reliant les deux portions (9, 10) de l'anneau de retenue (2) présente des interruptions (26).

11. Dispositif de retenue selon l'une quelconque des revendications 8 à 10, **caractérisé en ce que** les pattes (10) portant les pattes de retenue (12) présentent une portion dépassant radialement depuis la branche verticale (8) et une portion perpendiculaire dont la zone médiane recourbée, tournée radialement vers l'intérieur forme les pattes de retenue (12).

12. Dispositif de retenue selon l'une quelconque des revendications 1 à 11, **caractérisé en ce que** l'anneau de fermeture (5) est en forme de L en section transversale, en ce que les segments crantés (15) sont formés par déformation de la portion horizontale et en ce que la portion verticale présente des évidements (6) pour un outil.

13. Dispositif de retenue selon l'une quelconque des revendications 1 à 12, **caractérisé en ce qu'**il est prévu une butée de fin de course (17) sur l'extrémité la plus haute d'au moins un segment cranté (15) de l'anneau de fermeture (5).
